# EUROPÄISCHE PATENTSCHRIFT

(11) **EP 4 685 369 B1**
(45) Veröffentlichungstag und Bekanntmachung des Hinweises auf die Patenterteilung: **11.11.2026**
(21) Anmeldenummer: 25180858.0
(22) Anmeldetag: 04.06.2025
(51) Int. Cl.: F16K 1/36, F16K 31/385, F16K 31/524, F16K 31/56, E03C 1/04, G05D 7/01

(54) **SANITÄRVENTIL MIT PILOTVENTIL**
SANITARY VALVE WITH PILOT VALVE
VANNE SANITAIRE AVEC SOUPAPE PILOTE

(30) Priorität: 26.07.2024 DE 102024121426
(43) Veröffentlichungstag der Anmeldung: 28.01.2026
(73) Patentinhaber: Neoperl GmbH, 79379 Müllheim (DE)
(72) Erfinder: Bian, Yichao, 79379 Müllheim (DE); Tempel, Marc, 79111 Freiburg (DE)
(74) Vertreter: Mertzlufft-Paufler, Cornelius

(56) Entgegenhaltungen:
- CN-A- 101 218 458
- DE-U1- 202018 105 509

## Beschreibung

Die Erfindung betrifft ein Sanitärventil.

Die Erfindung betrifft weiter eine Sanitärarmatur mit einem erfindungsgemäßen Sanitärventil.

Das Sanitärventil umfasst ein Hauptventil, das ein bewegliches Schaltelement aufweist, und ein Pilotventil, mit welchem das Hauptventil zwischen einer Schließstellung, in der das Schaltelement auf einem Ventilsitz des Hauptventils dicht aufliegt, und einer Offenstellung ansteuerbar ist, in der das Schaltelement zu dem Ventilsitz beabstandet ist, wobei das Pilotventil mit einem Ventilstößel zwischen einer Schließstellung und einer Offenstellung ansteuerbar ist, und wobei der Ventilstößel zumindest in seiner Schließstellung derart in eine Entlastungsöffnung des Schaltelements eintaucht, dass der Ventilstößel in zumindest einem Axialabschnitt radial gegen das Schaltelement abgedichtet ist Derartige Sanitärventile sind bekannt.

Aus der CN 101 218 458 A ist ein pilotgesteuertes Ventil nach dem Oberbegriff des Anspruchs 1 bekannt, bei dem ein über eine Rückdruckkammer und eine Führungswasserleitung gesteuertes Hauptventil durch ein Durchfluss-Pilotventil verstellt wird, wobei ein separates Ein-/Ausschalt-Pilotventil das Öffnen und Schließen des Ventils bewirkt und eine zuvor eingestellte Durchflussposition des Durchfluss-Pilotventils auch nach einem Absperrvorgang für den nächsten Öffnungsvorgang beibehalten wird.

Die Aufgabe der Erfindung besteht darin, die Herstellung derartiger Sanitärventile zu vereinfachen.

Zur Lösung der genannten Aufgabe sind erfindungsgemäß die Merkmale des Anspruchs 1 vorgesehen. Insbesondere wird somit zur Lösung der genannten Aufgabe bei Sanitärventilen der eingangs beschriebenen Art erfindungsgemäß vorgeschlagen, dass ein freies Ende des Ventilstößels in Offenstellung des Ventilstößels innerhalb der Entlastungsöffnung angeordnet ist.

Somit ist eine Beweglichkeit des freien Endes des Ventilstößels auch in Offenstellung eingeschränkt. Ein seitliches Ausbrechen des Ventilstößels bei seiner Betätigung ist somit nicht oder nur eingeschränkt möglich. Es ist nicht notwendig, dass der Ventilstößel in Offenstellung das Schaltelement berührt. Der Ventilstößel wird dennoch bei dem nächsten Schließvorgang sicher innerhalb der Entlastungsöffnung geführt und kann derart in diese eintauchen, dass der Ventilstößel in zumindest einem Axialabschnitt radial gegen das Schaltelement abgedichtet ist. Es ist daher nicht notwendig, den Ventilstößel über gesonderte Bauteile des Ventils in Richtung der Entlastungsöffnung zu führen, um eine sichere Abdichtung bei jedem Schließvorgang zu gewährleisten.

Zusätzlich kann vorgesehen sein, dass das freie Ende des Ventilstößels mit einem querschnittsreduzierten und/oder unrunden Abschnitt in Offenstellung des Ventilstößels innerhalb der Entlastungsöffnung angeordnet ist.

Unter einem Querschnitt im Sinne dieser Anmeldung kann hierbei insbesondere eine Querschnittsfläche verstanden werden. Bei dem Querschnitt des freien Endes des Ventilstößels kann es sich insbesondere um die orthogonal zur Längsachse des Ventilstößels orientierte Querschnittsfläche handeln. Diese kann querschnittsreduziert und/oder unrund im Vergleich zu einem sich an das freie Ende anschließenden Abschnitt des Ventilstößels ausgeführt sein. Das freie Ende kann insbesondere als der querschnittsreduzierte und/oder unrunde Abschnitt an einem in Richtung des Schaltelements orientierten Ende des Ventilstößels definiert sein.

Das freie Ende des Ventilstößels kann somit auf die Interaktion mit dem Schaltelement angepasst sein, wobei ein anderer Abschnitt des Ventilstößels beispielsweise mit größerem Querschnitt und/oder rund ausgeführt sein kann, um die Stabilität des Ventilstößels zu erhöhen oder Bewegungswiderstände innerhalb des Gehäuses des Ventils zu reduzieren.

Alternativ oder zusätzlich hierzu kann vorgesehen sein, dass das freie Ende des Ventilstößels in Offenstellung des Ventilstößels innerhalb eines konischen Axialabschnitts der Entlastungsöffnung angeordnet ist.

Somit kann eine axiale Beweglichkeit des Ventilstößels in Offenstellung gegeben sein, um den Ventilstößel in Offenstellung spannungsfrei zu halten und dessen Lebensdauer zu erhöhen. Während des Schließvorgangs kann der Ventilstößel durch die konische Form des konischen Axialabschnitts besonders schonend in die gewünschte Position zur Abdichtung gegen das Schaltelement geführt werden.

Bei einer vorteilhaften Ausgestaltung kann vorgesehen sein, dass dem Ventilsitz nachgeordnet eine Wasserauslassöffnung angeordnet ist.

Somit kann das Ventil zur Wasserausgabe in eine gewünschte Richtung relativ zu dem Ventil verwendet werden.

Zusätzlich kann vorgesehen sein, dass die Wasserauslassöffnung einen größeren Durchmesser als der Ventilsitz aufweist.

Somit kann ein Wasserdruck zur Wasserausgabe reduziert werden.

Bei einer vorteilhaften Ausgestaltung kann vorgesehen sein, dass der Axialabschnitt des Ventilstößels, in dem der Ventilstößel in seiner Schließstellung radial gegen das Schaltelement abgedichtet ist, beabstandet zu einem freien Ende des Ventilstößels angeordnet ist.

Somit kann ein Überstand des Ventilstößels an dessen freien Ende über den abgedichteten Bereich hinaus gegeben sein. Insbesondere kann der Ventilstößel gegen das Schaltelement im Bereich einer Querschnittsverengung der Entlastungsöffnung abgedichtet sein. Der Überstand des Ventilstößels kann dann beispielsweise zu einer regelmäßigen Reinigung der Querschnittsverengung, insbesondere während der Schließvorgänge, verwendet werden.

Zusätzlich kann vorgesehen sein, dass der Ventilstößel in einem Abschnitt zwischen dem Axialabschnitt, in dem der Ventilstößel in seiner Schließstellung radial gegen das Schaltelement abgedichtet ist, und dem freien Ende einen gegenüber dem Axialabschnitt reduzierten und/oder einen unrunden Querschnitt aufweist. Zusätzlich hierzu kann vorgesehen sein, dass der Querschnitt axiale Nuten und/oder Rippen formend ausgeführt ist.

Das freie Ende kann somit vielfältig gestaltet und an das Zusammenwirken mit dem Schaltelement angepasst sein.

Bei einer vorteilhaften Ausgestaltung kann vorgesehen sein, dass die Entlastungsöffnung einen konischen Axialabschnitt aufweist.

Der konische Axialabschnitt der Entlastungsöffnung kann, wie bereits erwähnt, der zunehmenden radialen Bewegungseinschränkung des Ventilstößels während eines Schaltvorgangs dienen.

Es kann hierbei vorgesehen sein, dass der konische Axialabschnitt an einer von dem Ventilsitz abgewandten Seite des Schaltelements angeordnet ist.

Die von dem Ventilsitz abgewandte Seite des Schaltelements kann insbesondere dem Ventilstößel zugewandt sein. Der konische Axialabschnitt kann daher so platziert sein, dass der Ventilstößel, beispielsweise bei der Montage des Ventils, zuerst in den konischen Axialabschnitt eintaucht. Geringe Fertigungstoleranzen können somit kompensiert werden und der Ventilstößel kann in Richtung der gewünschten Position innerhalb des Schaltelements gelenkt werden.

Bei einer vorteilhaften Ausgestaltung kann vorgesehen sein, dass die Entlastungsöffnung einen zylindrischen Axialabschnitt aufweist.

Somit kann zumindest abschnittsweise Wasser ohne weitere Strömungswiderstände und damit einhergehende Druckänderungen durch das Schaltelement geleitet werden.

Es kann hierbei vorgesehen sein, dass der zylindrische Axialabschnitt an einer dem Ventilsitz zugewandten Seite des Schaltelements angeordnet ist.

Somit kann beispielsweise ein dem Ventilstößel abgewandter Bereich der Entlastungsöffnung, in dem keine radiale Einwirkung auf den Ventilstößel erforderlich ist, zylindrisch gestaltet werden.

Bei einer vorteilhaften Ausgestaltung kann vorgesehen sein, dass ein zylindrischer Axialabschnitt der Entlastungsöffnung und ein konischer Axialabschnitt der Entlastungsöffnung über eine Verengung miteinander verbunden sind.

Somit kann in einer Betätigungsrichtung des Ventilstößels zunächst ein konischer Axialabschnitt zur Führung des Ventilstößels ausgebildet sein, auf den die Verengung zur sicheren Abdichtung des Ventilstößels gegen das Schaltelement folgt. Auf die Verengung kann der zylindrische Axialabschnitt folgen, in dem keine weitere Führung des Ventilstößels notwendig ist.

Zusätzlich kann vorgesehen sein, dass die Verengung zylindrisch ist.

Somit kann die Verengung in Axialrichtung ausreichend lang gewählt werden, um eine ausreichende Abdichtung des Ventilstößels gegen das Schaltelement und/oder einen gewünschten, beispielsweise niedrigen, Bewegungswiderstand des Ventilstößels zu erreichen.

Die vorstehend beschriebene Ausgestaltung des Schaltelements kann auf den Ventilstößel abgestimmt sein, erfordert aber nicht, dass sich der Ventilstößel in seinem Schließzustand befindet.

Bei einer vorteilhaften Ausgestaltung kann vorgesehen sein, dass eine Abdichtung des Ventilstößels in seinem Schließzustand gegenüber dem Schaltelement in einem gegenüber den Öffnungen der Entlastungsöffnung verengten Axialabschnitt der Entlastungsöffnung ausgebildet ist. Zusätzlich kann vorgesehen sein, dass der verengte Axialabschnitt zylindrisch ist.

So können sowohl der Durchmesser als auch die Länge des verengten Axialabschnitts so gewählt werden, dass eine optimale Abdichtung des Ventilstößels in seinem Schließzustand gegenüber dem Schaltelement möglich ist. Der verengte Axialabschnitt kann den engsten Axialabschnitt der Entlastungsöffnung darstellen.

Erfindungsgemäß ist vorgesehen, dass das Schaltelement einstückig gefertigt ist.

Das Schaltelement ist somit auf einfache Weise herstellbar. Das Schaltelement kann aus nur einem Material gefertigt sein, um die Produktion zu vereinfachen und die Haltbarkeit und Zuverlässigkeit des Schaltelements gegenüber mehrteiligen Schaltelementen zu erhöhen.

Alternativ oder zusätzlich kann vorgesehen sein, dass das Schaltelement aus Gummi gefertigt ist.

Somit kann das Schaltelement eine gewünschte Elastizität und Stabilität aufweisen. Anstelle von Gummi können auch andere elastische Werkstoffe verwendet werden. Das Schaltelement kann somit auf einfache Weise beispielsweise mittels eines (Spritz-)Gussverfahrens hergestellt werden.

Bei einer vorteilhaften Ausgestaltung kann vorgesehen sein, dass das Schaltelement vorzugsweise außenseitig einen Membranabschnitt aufweist.

Somit kann innerhalb des Schaltelements eine Beweglichkeit hergestellt werden. Der Membranabschnitt kann beispielsweise in einer äußeren Hälfte, insbesondere einem äußeren Drittel, des Schaltelements ausgebildet sein. Die äußere Hälfte und das äußere Drittel können beispielsweise entlang eines Radius oder Durchmessers eines runden Schaltelements bestimmt werden.

Alternativ oder zusätzlich kann vorgesehen sein, dass das Schaltelement vorzugsweise innenseitig einen von der Entlastungsöffnung durchsetzten Zentralabschnitt aufweist.

Somit kann die Entlastungsöffnung zentral in dem Schaltelement platziert sein. Der Zentralabschnitt kann an den Membranabschnitt anschließen. Beispielsweise kann eine Dicke des Schaltelements in dem Zentralabschnitt wenigstens ein mehrfaches, beispielsweise fünffaches oder sogar zehnfaches der Dicke des Schaltelements in dem Membranabschnitt betragen.

Bei einer vorteilhaften Ausgestaltung kann vorgesehen sein, dass ein Zentralabschnitt des Schaltelements einen in Schließrichtung des Hauptventils orientierten Fortsatz aufweist, welcher zumindest in einer Schließstellung des Hauptventils den Ventilsitz durchsetzt. Bei dem Zentralabschnitt kann es sich insbesondere um den bereits erwähnten Zentralabschnitt handeln.

Somit kann ein axiales Verschieben des Schaltelements bei seiner Betätigung vermindert und die Dichtheit des Hauptventils optimiert werden. Ferner kann durch das Schaltelement strömendes Wasser sicher durch den Ventilsitz und zum Auslass gelenkt werden.

Zusätzlich kann vorgesehen sein, dass der Fortsatz konusförmig und/oder sich in Schließrichtung des Hauptventils verjüngend ausgeführt ist.

Der Fortsatz kann zumindest mittelbar zur Dichtwirkung beitragen, beispielsweise indem er den das Schaltelement an dem Ventilsitz ausrichtet. Ähnlich wie zuvor für den Ventilstößel erläutert, kann ein Fortsatz bei jeder Betätigung eine gleichartige Ausrichtung des Schaltelements gewährleisten, um eine optimale Abdichtung zu erzielen.

Bei einer vorteilhaften Ausgestaltung kann vorgesehen sein, dass der Zentralabschnitt des Schaltelements einen Dichtabschnitt aufweist, mittels welchem der Ventilsitz des Hauptventils dicht verschließbar ist.

Somit kann die Dichtwirkung im Bereich des Dichtabschnitts erzielt werden. Andere Abschnitte des Schaltelements können andere Funktionen wahrnehmen und beispielsweise nicht dichtend sein.

Zusätzlich kann vorgesehen sein, dass der Dichtabschnitt eine in Schließrichtung des Hauptventils und/oder quer zu dem Ventilsitz orientierte Schließfläche aufweist.

Somit kann der Dichtabschnitt mit seiner Schließfläche den Ventilsitz des Hauptventils kontaktieren. Unter der Schließfläche kann insbesondere der Bereich des Dichtabschnitts verstanden werden, mit dem der Dichtabschnitt regelmäßig den Ventilsitz des Hauptventils kontaktiert.

Bei einer vorteilhaften Ausgestaltung kann vorgesehen sein, dass ein Zentralabschnitt des Schaltelements einen entgegen der Schließrichtung des Hauptventils orientierten Einführabschnitt aufweist, innerhalb dessen eine Querschnittserweiterung der Entlastungsöffnung ausgebildet ist.

Bei dem Zentralabschnitt kann es sich insbesondere um den bereits erwähnten Zentralabschnitt handeln. Die Querschnittserweiterung kann insbesondere konusförmig ausgeführt sein.

Ein Einführen des Ventilstößels bei der Fertigung des Ventils kann somit erleichtert werden. Es ist somit auch möglich, dass das freie Ende des Ventilstößels in Offenstellung des Ventils zwar in das Schaltelement eintaucht, dieses jedoch nicht berührt.

Bei einer vorteilhaften Ausgestaltung kann vorgesehen sein, dass der Membranabschnitt zur Bereitstellung einer Beweglichkeit eines Zentralabschnitts ausgeführt ist. Bei dem Zentralabschnitt kann es sich insbesondere um den bereits erwähnten Zentralabschnitt handeln.

Somit ist eine Beweglichkeit innerhalb des Schaltelements hergestellt. Der Zentralabschnitt kann somit relativ zu dem Membranabschnitt beweglich sein.

Bei einer vorteilhaften Ausgestaltung kann vorgesehen sein, dass der Membranabschnitt einen Materialschwächungsbereich aufweist.

Die Art und Weise der Beweglichkeit des Zentralabschnitts relativ zu dem Membranabschnitt kann somit genauer festgelegt sein.

Bei einer vorteilhaften Ausgestaltung kann vorgesehen sein, dass der Membranabschnitt an einem und/oder zwischen mehreren Gehäuseteilen des Sanitärventils befestigt ist. Der Membranabschnitt kann hierzu einen Befestigungsabschnitt aufweisen, mit welchem er wie beschrieben befestigt ist.

Somit kann das Schaltelement sicher an dem Gehäuse des Ventils befestigt sein, während der Zentralabschnitt relativ zu dem Membranabschnitt beweglich ist. Der Befestigungsabschnitt des Membranabschnitts kann hierbei eine Materialverdickung aufweisen. Dies erhöht die Stabilität der Befestigung des Schaltelements an dem Gehäuse des Ventils.

Bei einer vorteilhaften Ausgestaltung kann vorgesehen sein, dass das Schaltelement von Stegen eines Gehäuseteils des Sanitärventils geführt ist.

Hierbei kann vorgesehen sein, dass der Zentralabschnitt, insbesondere der bereits erwähnte Zentralabschnitt, des Schaltelements geführt ist. Die Stege des Gehäuseteils können hierbei durch Nuten getrennt sein.

Die Art und Weise der Führung des Schaltelements kann somit noch genauer ausgestaltet und optimiert werden.

Bei einer vorteilhaften Ausgestaltung kann vorgesehen sein, dass das Schaltelement von einer Befüllöffnung durchsetzt ist, mittels welcher ein pilotventilseitig befindlicher Bereich des Sanitärventils bei in Schließstellung befindlichem Hauptventil befüllbar ist.

Somit kann in dem in Bezug auf das Schaltelement pilotventilseitig befindlichen Bereich, der als Druckkammer bezeichnet werden könnte, ein Wasserdruck aufgebaut werden, der das Hauptventil geschlossen hält, bis die Entlastungsöffnung durch Bewegen des Ventilstößels freigegeben wird.

Zusätzlich kann vorgesehen sein, dass das Schaltelement außerhalb eines, insbesondere des bereits erwähnten, Zentralabschnitts von der Befüllöffnung durchsetzt ist.

Die Befüllöffnung kann somit beispielswiese in dem Membranabschnitt vorgesehen sein. Die Tiefe der Befüllöffnung kann so klein gehalten werden, insbesondere wenn sie in einem Materialschwächungsbereich des Membranabschnitts vorgesehen ist.

Ferner kann zusätzlich vorgesehen sein, dass ein Durchmesser der Befüllöffnung durch ein Reduzierelement verengt ist.

Somit kann ein Durchmesser der Befüllöffnung genauer festlegbar sein. Somit kann auch ein die Befüllöffnung passierender Volumenstrom und eine Befülldauer des zu befüllenden Bereichs festlegbar sein.

Bei dem Reduzierelement kann es sich um eine Feder handeln. Hierbei kann auch lediglich ein gerade verlaufender Abschnitt der Feder die Befüllöffnung verengen.

Das Reduzierelement kann die Befüllöffnung somit durchsetzen und/oder relativ zu dem Gehäuse in einer feststehenden Lage befindlich sein. Somit kommt es während der Schaltvorgänge zu einer Relativbewegung zwischen Befüllöffnung und Reduzierelement, wodurch eine Reinigungsfunktion gegeben ist, die ein Zusetzen der Befüllöffnung vermeiden kann.

Bei einer vorteilhaften Ausgestaltung kann vorgesehen sein, dass ein an den Ventilsitz grenzender Abschnitt eines Gehäuseteils des Sanitärventils Führungsstege zur Führung des in Schließrichtung des Hauptventils orientierten Fortsatzes des Schaltelements aufweist.

Zusätzlich kann vorgesehen sein, dass es sich bei der Führung des Fortsatzes um die Führung während eines Schaltvorgangs des Hauptventils handelt.

Somit kann der Fortsatz während seiner Bewegung während des Schaltvorgangs geführt sein und die Bewegung des Schaltelements kontrolliert werden.

Bei einer vorteilhaften Ausgestaltung kann vorgesehen sein, dass eine Push-Push-Mechanik zur Verstellung des Ventilstößels zwischen seiner Schließstellung und seiner Offenstellung vorgesehen ist.

Somit ist ein besonderer Bedienkomfort und eine einfache Bedienbarkeit des Ventils für den Benutzer des Ventils realisierbar.

Bei einer vorteilhaften Ausgestaltung kann vorgesehen sein, dass der Ventilstößel aus einem homogenen Material gefertigt ist. Bei dem homogenen Material kann es sich beispielsweise um einen Kunststoff handeln.

An dem Ventilstößel angebrachte Dichtungen bzw. Dichtelemente sind somit verzichtbar. Der Ventilstößel kann auf diese Weise besonders einfach und kostengünstig gefertigt werden.

Bei einer vorteilhaften Ausgestaltung kann vorgesehen sein, dass das Schaltelement einen Faltabschnitt aufweist, der eine Schaltbewegung zwischen der Offenstellung und der Schließstellung des Hauptventils ermöglicht.

Bei dem Faltabschnitt kann es sich um einen Abschnitt des Membranabschnitts handeln. Der Faltabschnitt kann hierbei ringförmig umlaufend sein.

Zusätzlich kann vorgesehen sein, dass das Schaltelement in einem Bereich des Pilotventilsitzes eine größere, insbesondere mehrfach größere, Materialstärke aufweist als im Faltabschnitt.

Somit kann einerseits eine besonders sichere Abdichtung am Pilotventilsitz und andererseits eine ausreichende Beweglichkeit im Bereich des Faltabschnitts realisiert werden.

Alternativ oder zusätzlich kann vorgesehen sein, dass das Schaltelement an einer Befüllöffnung eine geringere, insbesondere mehrfach geringere, Materialstärke als im Bereich des Pilotventilsitzes hat.

Somit kann eine Tiefe der Befüllöffnung kleingehalten werden, während die Dichtheit im Bereich des Pilotventilsitzes unbeeinflusst bleibt.

Alternativ oder zusätzlich kann vorgesehen sein, dass das Schaltelement an einer Befüllöffnung, insbesondere der bereits erwähnten Befüllöffnung, eine größere, insbesondere mehrfach größere, Materialstärke als im Faltabschnitt hat.

Somit kann eine ausreichende Stabilität des Schaltelements im Bereich der Befüllöffnung bereitgestellt werden. Dies ist besonders dann von Vorteil, wenn die Befüllöffnung mit dem Reduzierelement durchsetzt ist und in diesem Bereich Reibungskräfte zur Reinigung und/oder Offenhaltung der Befüllöffnung genutzt werden.

Alternativ oder zusätzlich sind zur Lösung der genannten Aufgabe erfindungsgemäß die Merkmale des nebengeordneten, auf eine Sanitärarmatur gerichteten Anspruchs vorgesehen. Insbesondere wird somit zur Lösung der genannten Aufgabe bei Sanitärarmaturen der eingangs beschriebenen Art erfindungsgemäß vorgeschlagen, dass die Sanitärarmatur ein erfindungsgemäßes Sanitärventil aufweist.

Somit können die genannten Vorteile erfindungsgemäßer Sanitärventilen bei Sanitärarmaturen genutzt werden.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigen:

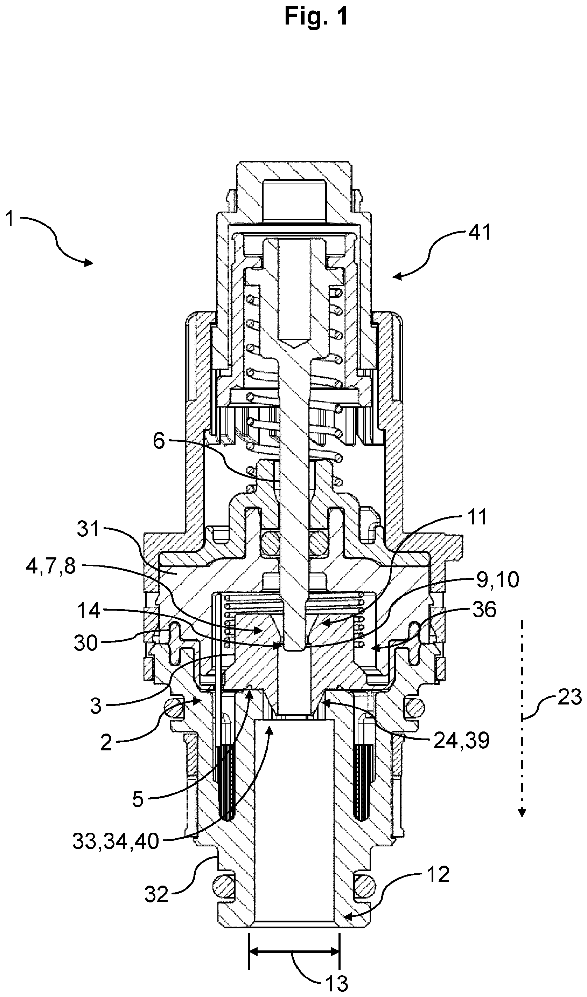

- Fig. 1: ein erfindungsgemäßes Sanitärventil in einer seitlichen Schnittansicht,

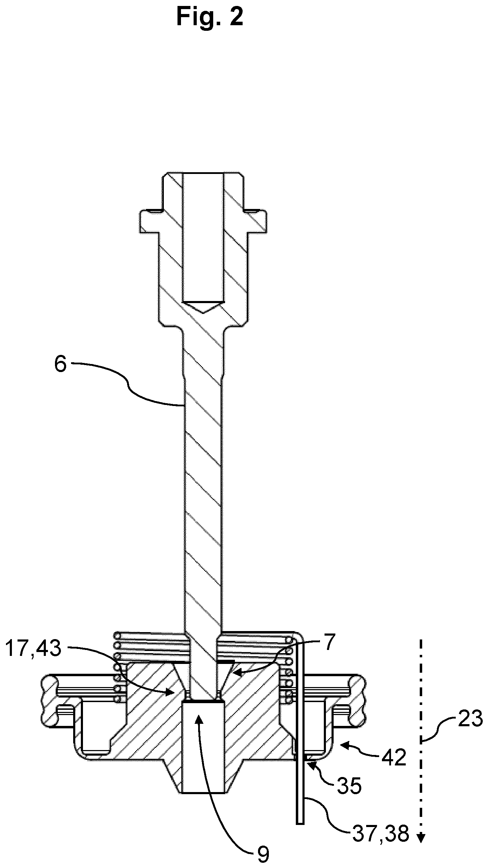

- Fig. 2: das Schaltelement des Sanitärventils aus Figur 1 mit zugehörigem Ventilstößel und zugehöriger Feder in einer seitlichen Schnittansicht,
- Fig. 3: das Schaltelement des Sanitärventils aus Figur 1 in einer perspektivischen Ansicht,
- Fig. 4: das Schaltelement des Sanitärventils aus Figur 1 in einer Ansicht von unten,
- Fig. 5: das Schaltelement des Sanitärventils aus Figur 1 in einer Ansicht von oben,
- Fig. 6: das Schaltelement des Sanitärventils aus Figur 1 in einer Schnittansicht,

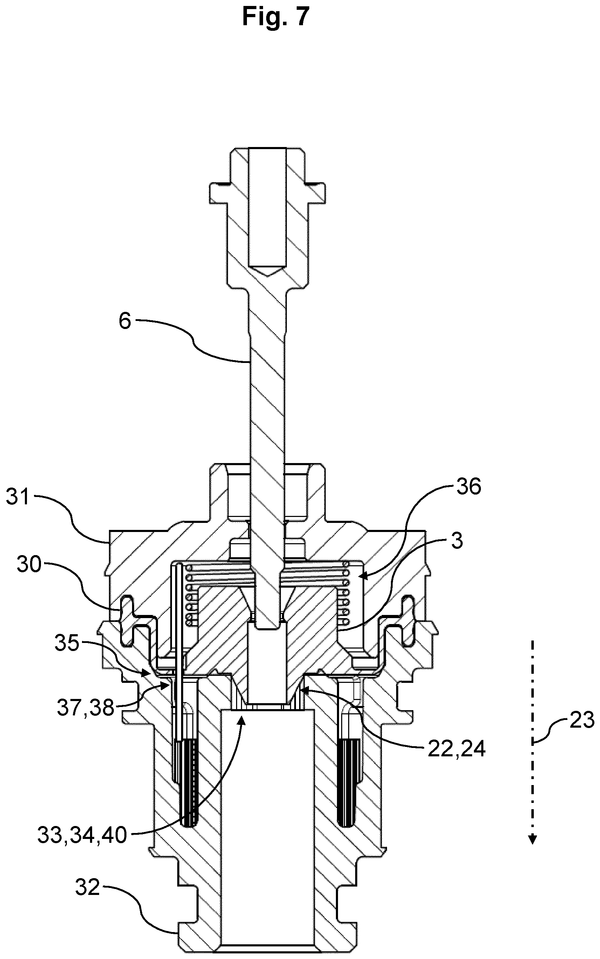

- Fig. 7: die Anordnung aus Figur 2 zusammen mit zwei Gehäuseteilen in einer Schnittansicht,
- Fig. 8: das Sanitärventil aus Figur 1 in einer seitlichen Schnittansicht in Offenstellung.

Die Figuren zeigen jeweils dasselbe Ausführungsbeispiel und werden daher zusammenhängend beschrieben. Mit Bezugszeichen versehene Elemente sind zumindest in einer Figur bezeichnet, so dass sich deren Identität aus einer Zusammenschau der Figuren ergeben kann. Gezeigt ist ein erfindungsgemäßes Sanitärventil 1 mit einem Hauptventil 2, das ein bewegliches Schaltelement 3 aufweist, und mit einem Pilotventil 4, mit welchem das Hauptventil 2 zwischen einer Schließstellung, in der das Schaltelement 3 auf einem Ventilsitz 5 des Hauptventils 2 dicht aufliegt, und einer Offenstellung ansteuerbar ist, in der das Schaltelement 3 zu dem Ventilsitz 5 beabstandet ist. Das Sanitärventil 1 ist stets in seiner Schließstellung gezeigt, in der sowohl das Hauptventil 2 als auch das Pilotventil 4 geschlossen sind.

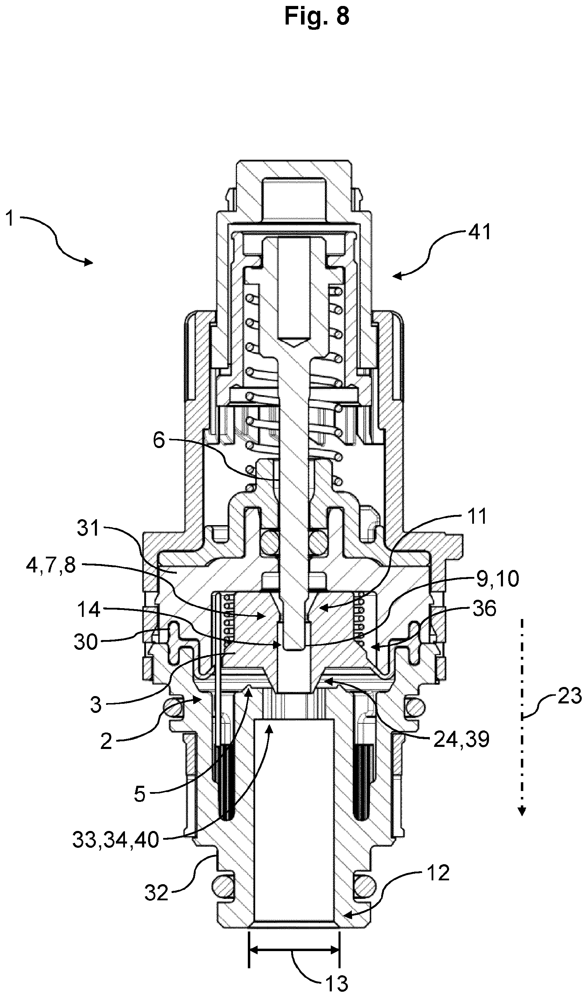

Das Pilotventil 4 ist mit einem Ventilstößel 6 zwischen einer Schließstellung und einer Offenstellung ansteuerbar, wobei der Ventilstößel 6 zumindest in seiner Schließstellung derart in eine Entlastungsöffnung 7 des Schaltelements 3 eintaucht, dass der Ventilstößel 6 in zumindest einem Axialabschnitt 8 radial gegen das Schaltelement 3 abgedichtet ist. Hierbei ist ein freies Ende 9 des Ventilstößels 6, und zwar mit einem querschnittsreduzierten Abschnitt 10, der in einer nicht gezeigten Ausführungsform alternativ oder zusätzlich unrund sein kann, auch in der in Figur 8 gezeigten Offenstellung des Ventilstößels 6 innerhalb der Entlastungsöffnung 7, nämlich innerhalb eines konischen Axialabschnitts 11 der Entlastungsöffnung 7, angeordnet. Der Ventilstößel 6 ist daher in Offenstellung so weit entgegen der Schließrichtung 23 des Hauptventils 2 verlagert, dass keine Abdichtung des Ventilstößels 6 in dem Axialabschnitt 8 gegeben ist, das freie Ende 9 jedoch noch nicht die Entlastungsöffnung 7 verlassen hat.

Ferner ist dem Ventilsitz 5 nachgeordnet eine Wasserauslassöffnung 12 angeordnet, wobei die Wasserauslassöffnung 12 einen größeren Durchmesser 13 als der Ventilsitz 5 aufweist.

Der Axialabschnitt 8 des Ventilstößels 6, in dem der Ventilstößel 6 in seiner Schließstellung radial gegen das Schaltelement 3 abgedichtet ist, ist beabstandet zu einem freien Ende 9 des Ventilstößels 6 angeordnet. In einer nicht gezeigten Ausführungsform kann der Ventilstößel 6 in einem Abschnitt 14 zwischen dem Axialabschnitt 8 und dem freien Ende 9 einen gegenüber dem Axialabschnitt 8 reduzierten Querschnitt aufweisen. In nicht gezeigten Ausführungsformen kann der Ventilstößel 6 in dem Abschnitt 14 alternativ oder zusätzlich einen unrunden, insbesondere axiale Nuten und/oder Rippen formenden, Querschnitt aufweisen.

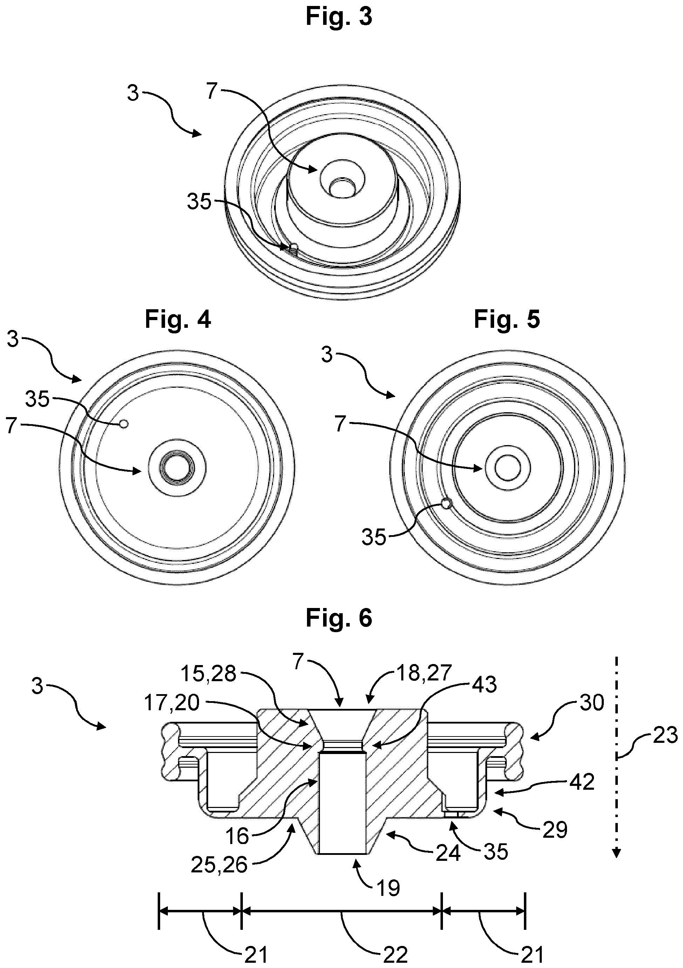

Die Entlastungsöffnung 7 weist einen konischen und einen zylindrischen Axialabschnitt 15, 16 auf, wobei der konische Axialabschnitt 15 an einer von dem Ventilsitz 5 abgewandten Seite des Schaltelements 3 und der zylindrische Axialabschnitt 16 an einer dem Ventilsitz 5 zugewandten Seite des Schaltelements 3 angeordnet ist. Dies ist besonders gut in Figur 6 zu erkennen. Die Länge des zylindrischen Axialabschnitts 16 in Axialrichtung des Sanitärventils 1 beträgt wenigstens das doppelte der Länge des konischen Axialabschnitts 15. Im Ausführungsbeispiel sind der zylindrische Axialabschnitt 16 der Entlastungsöffnung 7 und der konische Axialabschnitt 15 der Entlastungsöffnung 7 über eine zylindrische Verengung 17 miteinander verbunden.

Eine Abdichtung des Ventilstößels 6 in seinem Schließzustand gegenüber dem Schaltelement 3 ist in einem gegenüber den Öffnungen 18, 19 der Entlastungsöffnung 7 verengten, zylindrischen Axialabschnitt 20 der Entlastungsöffnung 7 ausgebildet.

Bei dem gezeigten Sanitärventil 1 ist das Schaltelement 3 einstückig und aus Gummi gefertigt. Das Schaltelement 3 weist außenseitig einen Membranabschnitt 21 und innenseitig einen von der Entlastungsöffnung 7 durchsetzten Zentralabschnitt 22 auf. Der Zentralabschnitt 22 des Schaltelements 3 weist ferner einen in Schließrichtung 23 des Hauptventils 2 orientierten Fortsatz 24 auf, welcher zumindest in einer Schließstellung des Hauptventils 2 den Ventilsitz 5 durchsetzt, wobei der Fortsatz 24 konusförmig und sich in Schließrichtung 23 des Hauptventils 2 verjüngend ausgeführt ist.

Der Zentralabschnitt 22 des Schaltelements 3 weist einen Dichtabschnitt 25 auf, mittels welchem der Ventilsitz 5 des Hauptventils 2 dicht verschließbar ist. Der Dichtabschnitt 25 weist eine in Schließrichtung 23 des Hauptventils 2 und quer zu dem Ventilsitz 5 orientierte Schließfläche 26 auf.

Der Zentralabschnitt 22 des Schaltelements 3 weist einen entgegen der Schließrichtung 23 des Hauptventils 2 orientierten Einführabschnitt 27 auf, innerhalb dessen eine konusförmige Querschnittserweiterung 28 der Entlastungsöffnung 7 ausgebildet ist.

Der Membranabschnitt 21 ist zur Bereitstellung einer Beweglichkeit des Zentralabschnitts 22 ausgeführt und weist einen Materialschwächungsbereich 29 auf. Der Membranabschnitt 21 ist mit einem Befestigungsabschnitt 30 zwischen mehreren Gehäuseteilen 31, 32 des Sanitärventils 1 befestigt. In einer nicht gezeigten Ausführungsform kann der Membranabschnitt 21 an nur einem Gehäuseteil des Sanitärventils 1 befestigt sein.

Das Schaltelement 3, nämlich sein Zentralabschnitt 22, ist von durch Nuten 33 getrennten Stegen 34 eines Gehäuseteils 32 des Sanitärventils 1 geführt.

Das Schaltelement 3 ist außerhalb des Zentralabschnitts 22 von einer Befüllöffnung 35 durchsetzt, mittels welcher ein pilotventilseitig befindlicher Bereich 36 des Sanitärventils 1 bei in Schließstellung befindlichem Hauptventil 2 befüllbar ist. Ein Durchmesser der Befüllöffnung 35 ist durch ein Reduzierelement 37, nämlich eine Feder 38, verengt.

Ein an den Ventilsitz 5 grenzender Abschnitt 39 des Gehäuseteils 32 des Sanitärventils 1 weist Führungsstege 40 zur Führung des in Schließrichtung 23 des Hauptventils 2 orientierten Fortsatzes 24 des Schaltelements 3 während eines Schaltvorgangs des Hauptventils 2 auf. In dem gezeigten Ausführungsbeispiel handelt es sich bei den Führungsstegen 40 um die Stege 34.

Ferner ist eine Push-Push-Mechanik 41 zur Verstellung des Ventilstößels 6 zwischen seiner Schließstellung und seiner Offenstellung vorgesehen. Der Ventilstößel 6 ist aus einem homogenen Material, nämlich einem Kunststoff, gefertigt.

Das Schaltelement 3 weist einen ringförmig umlaufenden Faltabschnitt 42 auf, der eine Schaltbewegung zwischen der Offenstellung und der Schließstellung des Hauptventils 2 ermöglicht. Das Schaltelement 3 weist in einem Bereich des Pilotventilsitzes 43 eine größere, insbesondere mehrfach größere, Materialstärke auf als im Faltabschnitt 42. Das Schaltelement 3 hat an seiner Befüllöffnung 35 eine geringere, insbesondere mehrfach geringere, Materialstärke als im Bereich des Pilotventilsitzes 43 und eine größere, insbesondere mehrfach größere, Materialstärke als im Faltabschnitt 42.

Das Sanitärventil 1 kann beispielsweise Teil einer nicht gezeigten Sanitärarmatur sein, in diese eingebaut bzw. mit dieser verwendet werden.

Es wird somit ein Sanitärventil 1 mit einem Hauptventil 2, das ein bewegliches Schaltelement 3 aufweist, und mit einem Pilotventil 4, mit welchem das Hauptventil 2 zwischen einer Schließstellung, in der das Schaltelement 3 auf einem Ventilsitz 5 des Hauptventils 2 dicht aufliegt, und einer Offenstellung ansteuerbar ist, in der das Schaltelement 3 zu dem Ventilsitz 5 beabstandet ist, vorgeschlagen, wobei das Pilotventil 4 mit einem Ventilstößel 6 zwischen einer Schließstellung und einer Offenstellung ansteuerbar ist, wobei der Ventilstößel 6 zumindest in seiner Schließstellung derart in eine Entlastungsöffnung 7 des Schaltelements 3 eintaucht, dass der Ventilstößel 6 in zumindest einem Axialabschnitt 8 radial gegen das Schaltelement 3 abgedichtet ist, und wobei ein freies Ende 9 des Ventilstößels 6, insbesondere mit einem querschnittsreduzierten und/oder unrunden Abschnitt 10, in Offenstellung des Ventilstößels 6 innerhalb der Entlastungsöffnung 7, insbesondere innerhalb eines konischen Axialabschnitts 11 der Entlastungsöffnung 7, angeordnet ist. Ferner wird eine Sanitärarmatur mit einem erfindungsgemäßen Sanitärventil 1 vorgeschlagen.

### Bezugszeichenliste

- 1: Sanitärventil
- 2: Hauptventil
- 3: Schaltelement
- 4: Pilotventil
- 5: Ventilsitz
- 6: Ventilstößel
- 7: Entlastungsöffnung
- 8: Axialabschnitt
- 9: freies Ende
- 10: Abschnitt
- 11: Axialabschnitt
- 12: Wasserauslassöffnung
- 13: Durchmesser
- 14: Abschnitt
- 15: Axialabschnitt
- 16: Axialabschnitt
- 17: Verengung
- 18: Öffnung
- 19: Öffnung
- 20: Axialabschnitt
- 21: Membranabschnitt
- 22: Zentralabschnitt
- 23: Schließrichtung
- 24: Fortsatz
- 25: Dichtabschnitt
- 26: Schließfläche
- 27: Einführabschnitt
- 28: Querschnittserweiterung
- 29: Materialschwächungsbereich
- 30: Befestigungsabschnitt
- 31: Gehäuseteil
- 32: Gehäuseteil
- 33: Nut
- 34: Steg
- 35: Befüllöffnung
- 36: Bereich
- 37: Reduzierelement
- 38: Feder
- 39: Abschnitt
- 40: Führungsstege
- 41: Push-Push-Mechanik
- 42: Faltabschnitt
- 43: Pilotventilsitz

## Patentansprüche

1. Sanitärventil (1) mit einem Hauptventil (2), das ein bewegliches Schaltelement (3) aufweist, und mit einem Pilotventil (4), mit welchem das Hauptventil (2) zwischen einer Schließstellung, in der das Schaltelement (3) auf einem Ventilsitz (5) des Hauptventils (2) dicht aufliegt, und einer Offenstellung ansteuerbar ist, in der das Schaltelement (3) zu dem Ventilsitz (5) beabstandet ist, wobei das Pilotventil (4) mit einem Ventilstößel (6) zwischen einer Schließstellung und einer Offenstellung ansteuerbar ist, und wobei der Ventilstößel (6) zumindest in seiner Schließstellung derart in eine Entlastungsöffnung (7) des Schaltelements (3) eintaucht, dass der Ventilstößel (6) in zumindest einem Axialabschnitt (8) radial gegen das Schaltelement (3) abgedichtet ist, wobei ein freies Ende (9) des Ventilstößels (6), insbesondere mit einem querschnittsreduzierten und/oder unrunden Abschnitt (10), in Offenstellung des Ventilstößels (6) innerhalb der Entlastungsöffnung (7), insbesondere innerhalb eines konischen Axialabschnitts (11) der Entlastungsöffnung (7), angeordnet ist, **dadurch gekennzeichnet, dass** das Schaltelement (3) einstückig gefertigt ist.

2. Sanitärventil (1) nach dem vorangehenden Anspruch, **dadurch gekennzeichnet, dass** dem Ventilsitz (5) nachgeordnet eine Wasserauslassöffnung (12) angeordnet ist, insbesondere wobei die Wasserauslassöffnung (12) einen größeren Durchmesser (13) als der Ventilsitz aufweist.

3. Sanitärventil (1) nach einem der vorangehenden Ansprüche, **dadurch gekennzeichnet, dass** der Axialabschnitt (8) des Ventilstößels (6), in dem der Ventilstößel (6) in seiner Schließstellung radial gegen das Schaltelement (3) abgedichtet ist, beabstandet zu einem freien Ende (9) des Ventilstößels (6) angeordnet ist, insbesondere wobei der Ventilstößel (6) in einem Abschnitt (14) zwischen dem Axialabschnitt (8) und dem freien Ende (9) einen gegenüber dem Axialabschnitt (8) reduzierten und/oder einen unrunden, insbesondere axiale Nuten und/oder Rippen formenden, Querschnitt aufweist.

4. Sanitärventil (1) nach einem der vorangehenden Ansprüche, **dadurch gekennzeichnet, dass** die Entlastungsöffnung (7) einen konischen und/oder einen zylindrischen Axialabschnitt (15, 16) aufweist, insbesondere wobei der konische Axialabschnitt (15) an einer von dem Ventilsitz (5) abgewandten Seite des Schaltelements (3) und/oder der zylindrische Axialabschnitt (16) an einer dem Ventilsitz (5) zugewandten Seite des Schaltelements (3) angeordnet ist.

5. Sanitärventil (1) nach einem der vorangehenden Ansprüche, **dadurch gekennzeichnet, dass** ein zylindrischer Axialabschnitt (16) der Entlastungsöffnung (7) und ein konischer Axialabschnitt (15) der Entlastungsöffnung (7) über eine vorzugsweise zylindrische Verengung (17) miteinander verbunden sind.

6. Sanitärventil (1) nach einem der vorangehenden Ansprüche, **dadurch gekennzeichnet, dass** eine Abdichtung des Ventilstößels (6) in seinem Schließzustand gegenüber dem Schaltelement (3) in einem gegenüber Öffnungen (18, 19) der Entlastungsöffnung (7) verengten, vorzugsweise zylindrischen, Axialabschnitt (20) der Entlastungsöffnung (7) ausgebildet ist.

7. Sanitärventil (1) nach einem der vorangehenden Ansprüche, **dadurch gekennzeichnet, dass** das Schaltelement (3) aus Gummi gefertigt ist.

8. Sanitärventil (1) nach einem der vorangehenden Ansprüche, **dadurch gekennzeichnet, dass** das Schaltelement (3) vorzugsweise außenseitig einen Membranabschnitt (21) und/oder vorzugsweise innenseitig einen von der Entlastungsöffnung (7) durchsetzten Zentralabschnitt (22) aufweist.

9. Sanitärventil (1) nach einem der vorangehenden Ansprüche, **dadurch gekennzeichnet, dass** der oder ein Zentralabschnitt (22) des Schaltelements (3) einen in Schließrichtung (23) des Hauptventils (2) orientierten Fortsatz (24) aufweist, welcher zumindest in einer Schließstellung des Hauptventils (2) den Ventilsitz (5) durchsetzt, insbesondere wobei der Fortsatz (24) konusförmig und/oder sich in Schließrichtung (23) des Hauptventils (2) verjüngend ausgeführt ist.

10. Sanitärventil (1) nach einem der vorangehenden Ansprüche, **dadurch gekennzeichnet, dass** der Zentralabschnitt (22) des Schaltelements (3) einen Dichtabschnitt (25) aufweist, mittels welchem der Ventilsitz (5) des Hauptventils (2) dicht verschließbar ist, insbesondere wobei der Dichtabschnitt (25) eine in Schließrichtung (23) des Hauptventils (2) und/oder quer zu dem Ventilsitz (5) orientierte Schließfläche (26) aufweist.

11. Sanitärventil (1) nach einem der vorangehenden Ansprüche, **dadurch gekennzeichnet, dass** der oder ein Zentralabschnitt (22) des Schaltelements (3) einen entgegen der Schließrichtung (23) des Hauptventils (2) orientierten Einführabschnitt (27) aufweist, innerhalb dessen eine insbesondere konusförmige Querschnittserweiterung (28) der Entlastungsöffnung (7) ausgebildet ist.

12. Sanitärventil (1) nach einem der vorangehenden Ansprüche, **dadurch gekennzeichnet, dass** der Membranabschnitt (21) zur Bereitstellung einer Beweglichkeit des oder eines Zentralabschnitts (22) ausgeführt ist und/oder einen Materialschwächungsbereich (29) aufweist und/oder vorzugsweise mit einem Befestigungsabschnitt (30) an einem und/oder zwischen mehreren Gehäuseteilen (31, 32) des Sanitärventils (1) befestigt ist.

13. Sanitärventil (1) nach einem der vorangehenden Ansprüche, **dadurch gekennzeichnet, dass** das Schaltelement (3), insbesondere sein Zentralabschnitt (22), von vorzugsweise durch Nuten (33) getrennten Stegen (34) eines Gehäuseteils (31, 32) des Sanitärventils (1) geführt ist.

14. Sanitärventil (1) nach einem der vorangehenden Ansprüche, **dadurch gekennzeichnet, dass** das Schaltelement (3) vorzugsweise außerhalb des oder eines Zentralabschnitts (22) von einer Befüllöffnung (35) durchsetzt ist, mittels welcher ein pilotventilseitig befindlicher Bereich (36) des Sanitärventils (1) bei in Schließstellung befindlichem Hauptventil (2) befüllbar ist, insbesondere wobei ein Durchmesser der Befüllöffnung (35) durch ein Reduzierelement (37), vorzugsweise eine Feder (38), verengt ist.

15. Sanitärventil (1) nach einem der vorangehenden Ansprüche, **dadurch gekennzeichnet, dass** ein an den Ventilsitz (5) grenzender Abschnitt (39) eines Gehäuseteils (31, 32) des Sanitärventils (1) Führungsstege (40) zur Führung eines oder des in Schließrichtung (23) des Hauptventils (2) orientierten Fortsatzes (24) des Schaltelements (3) insbesondere während eines Schaltvorgangs des Hauptventils (2) aufweist.

16. Sanitärventil (1) nach einem der vorangehenden Ansprüche, **dadurch gekennzeichnet, dass** eine Push-Push-Mechanik (41) zur Verstellung des Ventilstößels (6) zwischen seiner Schließstellung und seiner Offenstellung vorgesehen ist.

17. Sanitärventil (1) nach einem der vorangehenden Ansprüche, **dadurch gekennzeichnet, dass** der Ventilstößel (6) aus einem homogenen Material, insbesondere einem Kunststoff, gefertigt ist.

18. Sanitärventil (1) nach einem der vorangehenden Ansprüche, **dadurch gekennzeichnet, dass** das Schaltelement (3) einen vorzugsweise ringförmig umlaufenden Faltabschnitt (42) aufweist, der eine Schaltbewegung zwischen der Offenstellung und der Schließstellung des Hauptventils (2) ermöglicht, insbesondere wobei das Schaltelement (3) in einem Bereich des Pilotventilsitzes (43) eine größere, insbesondere mehrfach größere, Materialstärke aufweist als im Faltabschnitt (42) und/oder wobei das Schaltelement (3) an einer Befüllöffnung (35) eine geringere, insbesondere mehrfach geringere, Materialstärke als im Bereich des Pilotventilsitzes (43) und/oder eine größere, insbesondere mehrfach größere, Materialstärke als im Faltabschnitt (42) hat.

19. Sanitärarmatur mit einem Sanitärventil (1) nach einem der vorangehenden Ansprüche.

## Claims

1. Sanitary valve (1) comprising a main valve (2), which has a movable switching element (3), and comprising a pilot valve (4), using which the main valve (2) is drivable between a closed position, in which the switching element (3) rests tightly on a valve seat (5) of the main valve (2) and an open position, in which the switching element (3) is spaced apart from the valve seat (5), wherein the pilot valve (4) is drivable using a valve tappet (6) between a closed position and an open position, and wherein the valve tappet (6), at least in its closed position, plunges into a relief opening (7) of the switching element (3) such that the valve tappet (6) is radially sealed against the switching element (3) in at least one axial section (8), wherein a free end (9) of the valve tappet (6), in particular having a cross sectionreduced and/or nonround section (10), is arranged in the open position of the valve tappet (6) within the relief opening (7), in particular within a conical axial section (11) of the relief opening (7), **characterized in that** the switching element (3) is manufactured in one piece.

2. Sanitary valve (1) as claimed in the preceding claim, **characterized in that** a water outlet opening (12) is arranged downstream of the valve seat (5), in particular wherein the water outlet opening (12) has a larger diameter (13) than the valve seat.

3. Sanitary valve (1) as claimed in any one of the preceding claims, **characterized in that** the axial section (8) of the valve tappet (6), in which the valve tappet (6) in its closed position is radially sealed against the switching element (3), is arranged spaced apart from a free end (9) of the valve tappet (6), in particular wherein the valve tappet (6) has, in a section (14) between the axial section (8) and the free end (9), a cross section which is reduced in relation to the axial section (8) and/or is nonround, in particular forming axial grooves and/or ribs.

4. Sanitary valve (1) as claimed in any one of the preceding claims, **characterized in that** the relief opening (7) has a conical and/or a cylindrical axial section (15, 16), in particular wherein the conical axial section (15) is arranged on a side of the switching element (3) facing away from the valve seat (5) and/or the cylindrical axial section (16) is arranged on a side of the switching element (3) facing toward the valve seat (5).

5. Sanitary valve (1) as claimed in any one of the preceding claims, **characterized in that** a cylindrical axial section (16) of the relief opening (7) and a conical axial section (15) of the relief opening (7) are connected to one another via a preferably cylindrical constriction (17).

6. Sanitary valve (1) as claimed in any one of the preceding claims, **characterized in that** a seal of the valve tappet (6) in its closed state is formed in relation to the switching element (3) in an axial section (20) of the relief opening (7), which is constricted in relation to the openings (18, 19) of the relief opening (7) and is preferably cylindrical.

7. Sanitary valve (1) as claimed in any one of the preceding claims, **characterized in that** the switching element (3) is manufactured from rubber.

8. Sanitary valve (1) as claimed in any one of the preceding claims, **characterized in that** the switching element (3) preferably has a membrane section (21) on the outside and/or preferably has a central section (22) penetrated by the relief opening (7) on the inside.

9. Sanitary valve (1) as claimed in any one of the preceding claims, **characterized in that** the or a central section (22) of the switching element (3) has an extension (24) oriented in the closing direction (23) of the main valve (2), which penetrates the valve seat (5) at least in a closed position of the main valve (2), in particular wherein the extension (24) is embodied as conical and/or tapering in the closing direction (23) of the main valve (2).

10. Sanitary valve (1) as claimed in any one of the preceding claims, **characterized in that** the central section (22) of the switching element (3) has a seal section (25), by means of which the valve seat (5) of the main valve (2) is tightly closable, in particular wherein the seal section (25) has a closing surface (26) oriented in the closing direction (23) of the main valve (2) and/or transversely to the valve seat (5).

11. Sanitary valve (1) as claimed in any one of the preceding claims, **characterized in that** the or a central section (22) of the switching element (3) has an insertion section (27) oriented opposite to the closing direction (23) of the main valve (2), within which a cross-sectional expansion (28), which is in particular conical, of the relief opening (7) is formed.

12. Sanitary valve (1) as claimed in any one of the preceding claims, **characterized in that** the membrane section (21) is embodied to provide a mobility of the or a central section (22) and/or has a material weakening area (29) and/or is preferably fastened using a fastening section (30) on one and/or between multiple housing parts (31, 32) of the sanitary valve (1).

13. Sanitary valve (1) as claimed in any one of the preceding claims, **characterized in that** the switching element (3), in particular its central section (22), is guided by webs (34), preferably separated by grooves (33), of a housing part (31, 32) of the sanitary valve (1).

14. Sanitary valve (1) as claimed in any one of the preceding claims, **characterized in that** the switching element (3) is penetrated, preferably outside the or a central section (22), by a filling opening (35), by means of which an area (36) of the sanitary valve (1) located on the pilot valve side is fillable with the main valve (2) located in the closed position, in particular wherein a diameter of the filling opening (35) is constricted by a reducing element (37), preferably a spring (38).

15. Sanitary valve (1) as claimed in any one of the preceding claims, **characterized in that** a section (39) of a housing part (31, 32) of the sanitary valve (1) bordering the valve seat (5) has guide webs (40) for guiding a or the extension (24) of the switching element (3) oriented in the closing direction (23) of the main valve (2), in particular during a switching operation of the main valve (2).

16. Sanitary valve (1) as claimed in any one of the preceding claims, **characterized in that** a push-push mechanism (41) is provided for moving the valve tappet (6) between its closed position and its open position.

17. Sanitary valve (1) as claimed in any one of the preceding claims, **characterized in that** the valve tappet (6) is manufactured from a homogeneous material, in particular a plastic.

18. Sanitary valve (1) as claimed in any one of the preceding claims, **characterized in that** the switching element (3) has a preferably annular circumferential fold section (42), which enables a switching movement between the open position and the closed position of the main valve (2), in particular wherein the switching element (3) has a material thickness which is greater, in particular multiple times greater, in an area of the pilot valve seat (43) than in the fold section (42) and/or wherein the switching element (3) has a material thickness which is less, in particular multiple times less, at a filling opening (35) than in the area of the pilot valve seat (43) and/or has a material thickness which is greater, in particular multiple times greater, than in the fold section (42).

19. Sanitary fitting comprising a sanitary valve (1) as claimed in any one of the preceding claims.

## Revendications

1. Vanne sanitaire (1) avec une soupape principale (2) qui comporte un élément de commutation mobile (3) et avec une soupape pilote (4) avec laquelle la soupape principale (2) peut être actionnée entre une position fermée, dans laquelle l'élément de commutation (3) repose de façon étanche sur un siège de soupape (5) de la soupape principale (2), et une position ouverte dans laquelle l'élément de commutation (3) est écarté du siège de soupape (5), la soupape pilote (4) pouvant être actionnée avec un poussoir de soupape (6) entre une position fermée et une position ouverte et le poussoir de soupape (6) plongeant dans l'ouverture de décharge (7) de l'élément de commutation (3), au moins dans sa position fermée, de telle façon que le poussoir de soupape (6) est rendu étanche dans le sens radial, au moins dans une partie axiale (8), vis-à-vis de l'élément de commutation (3), une extrémité libre (9) du poussoir de soupape (6), en particulier avec une partie de section réduite et/ou non ronde (10), étant disposée à l'intérieur de l'ouverture de décharge (7) dans la position ouverte du poussoir de soupape (6), en particulier à l'intérieur d'une partie axiale conique (11) de l'ouverture de décharge (7), **caractérisée en ce que** l'élément de commutation (3) est fabriqué d'une pièce.

2. Vanne sanitaire (1) selon la revendication précédente, **caractérisée en ce qu'**une ouverture de sortie d'eau (12) est disposée en aval du siège de soupape (5), l'ouverture de sortie d'eau (12) présentant en particulier un plus grand diamètre (13) que le siège de soupape.

3. Vanne sanitaire (1) selon l'une des revendications précédentes, **caractérisée en ce que** la partie axiale (8) du poussoir de soupape (6), dans laquelle le poussoir de soupape (6) est rendu étanche dans le sens radial vis-à-vis de l'élément de commutation (3) dans sa position fermée, est disposée à distance d'une extrémité libre (9) du poussoir de soupape (6), le poussoir de soupape (6) présentant en particulier, dans une partie (14) comprise entre la partie axiale (8) et l'extrémité libre (9), une section réduite par rapport à la partie axiale (8) et/ou une section non ronde, en particulier formant des rainures et/ou des nervures axiales.

4. Vanne sanitaire (1) selon l'une des revendications précédentes, **caractérisée en ce que** l'ouverture de décharge (7) présente une partie axiale (15, 16) conique et/ou cylindrique, la partie axiale conique (15) étant en particulier disposée sur un côté de l'élément de commutation (3) tourné à l'opposé du siège de soupape (5) et/ou la partie axiale cylindrique (16) sur un côté de l'élément de commutation (3) tourné vers le siège de soupape (5).

5. Vanne sanitaire (1) selon l'une des revendications précédentes, **caractérisée en ce qu'**une partie axiale cylindrique (16) de l'ouverture de décharge (7) et une partie axiale conique (15) de l'ouverture de décharge (7) sont reliées entre elles par l'intermédiaire d'un resserrement (17), de préférence cylindrique.

6. Vanne sanitaire (1) selon l'une des revendications précédentes, **caractérisée en ce qu'**une étanchéité du poussoir de soupape (6) vis-à-vis de l'élément de commutation (3) dans son état fermé est formée dans une partie axiale (20), de préférence cylindrique, de l'ouverture de décharge (7), resserrée par rapport à des ouvertures (18, 19) de l'ouverture de décharge (7).

7. Vanne sanitaire (1) selon l'une des revendications précédentes, **caractérisée en ce que** l'élément de commutation (3) est fait de caoutchouc.

8. Vanne sanitaire (1) selon l'une des revendications précédentes, **caractérisée en ce que** l'élément de commutation (3) présente de préférence une partie de membrane (21) sur l'extérieur et/ou de préférence une partie centrale (22) traversée par l'ouverture de décharge (7) sur l'intérieur.

9. Vanne sanitaire (1) selon l'une des revendications précédentes, **caractérisée en ce que** la ou une partie centrale (22) de l'élément de commutation (3) présente une saillie (24) orientée dans le sens de fermeture (23) de la soupape principale (2), qui traverse le siège de soupape (5) au moins dans une position fermée de la soupape principale (2), la saillie (24) étant en particulier de forme conique et/ou se resserrant dans le sens de fermeture (23) de la soupape principale (2).

10. Vanne sanitaire (1) selon l'une des revendications précédentes, **caractérisée en ce que** la partie centrale (22) de l'élément de commutation (3) présente une partie d'étanchéité (25) au moyen de laquelle le siège de soupape (5) de la soupape principale (2) peut être fermé de façon étanche, la partie d'étanchéité (25) présentant en particulier une surface de fermeture (26) orientée dans le sens de fermeture (23) de la soupape principale (2) et/ou transversalement par rapport au siège de soupape (5).

11. Vanne sanitaire (1) selon l'une des revendications précédentes, **caractérisée en ce que** la ou une partie centrale (22) de l'élément de commutation (3) présente une partie d'introduction (27) orientée en sens inverse du sens de fermeture (23) de la soupape principale (2), à l'intérieur de laquelle un élargissement de section (28), en particulier conique, de l'ouverture de décharge (7) est formé.

12. Vanne sanitaire (1) selon l'une des revendications précédentes, **caractérisée en ce que** la partie de membrane (21) est réalisée de façon à produire une mobilité de la ou d'une partie centrale (22) et/ou présente une zone d'affaiblissement du matériau (29) et/ou est de préférence fixée avec une partie de fixation (30) à une partie de corps et/ou entre plusieurs parties de corps (31, 32) de la vanne sanitaire (1).

13. Vanne sanitaire (1) selon l'une des revendications précédentes, **caractérisée en ce que** l'élément de commutation (3), en particulier sa partie centrale (22), est guidé par des barrettes (34), de préférence séparées par des rainures (33), d'une partie de corps (31, 32) de la vanne sanitaire (1).

14. Vanne sanitaire (1) selon l'une des revendications précédentes, **caractérisée en ce que** l'élément de commutation (3) est de préférence traversé, à l'extérieur de la ou d'une partie centrale (22), par une ouverture de remplissage (35) au moyen de laquelle une zone (36) de la vanne sanitaire (1) située du côté de la soupape pilote peut être remplie quand la soupape principale (2) se trouve dans la position fermée, un diamètre de l'ouverture de remplissage (35) étant en particulier resserré par un élément réducteur (37), de préférence un ressort (38).

15. Vanne sanitaire (1) selon l'une des revendications précédentes, **caractérisée en ce qu'**une partie (39) d'une partie de corps (31, 32) de la vanne sanitaire (1) limitrophe du siège de soupape (5) présente des barrettes de guidage (40) destinées à guider une ou la saillie (24) de l'élément de commutation (3) orientée dans le sens de fermeture (23) de la soupape principale (2), en particulier pendant une opération de commutation de la soupape principale (2).

16. Vanne sanitaire (1) selon l'une des revendications précédentes, **caractérisée en ce qu'**un mécanisme push-push (41) est prévu pour déplacer le poussoir de soupape (6) entre sa position fermée et sa position ouverte.

17. Vanne sanitaire (1) selon l'une des revendications précédentes, **caractérisée en ce que** le poussoir de soupape (6) est fait d'un matériau homogène, en particulier d'un plastique.

18. Vanne sanitaire (1) selon l'une des revendications précédentes, **caractérisée en ce que** l'élément de commutation (3) présente une partie pliable (42), de préférence formant un anneau sur la circonférence, qui permet un mouvement de commutation entre la position ouverte et la position fermée de la soupape principale (2), l'élément de commutation (3) présentant en particulier, dans une zone du siège de soupape pilote (43), une plus grande épaisseur de matériau, en particulier plusieurs fois plus grande, que dans la partie pliable (42) et/ou l'élément de commutation (3) ayant au niveau d'une ouverture de remplissage (35) une plus petite épaisseur de matériau, en particulier plusieurs fois plus petite, que dans la zone du siège de soupape pilote (43) et/ou une plus grande épaisseur de matériau, en particulier plusieurs fois plus grande, que dans la partie pliable (42).

19. Robinetterie sanitaire équipée d'une vanne sanitaire (1) selon l'une des revendications précédentes.
